# EUROPEAN PATENT APPLICATION

(11) **EP 4 574 886 A1**
(43) Date of publication of application: **25.06.2025**
(21) Application number: 23383355.7
(22) Date of filing: 22.12.2023
(51) Int. Cl.: C08G 77/18, C08G 77/46, C08J 9/00, C08L 83/12, C09D 183/12

(54) **ADDITIVE FOR A RELEASE AGENT FOR MOULDED POLYURETHANE FOAMS**

(71) Applicant: Productos Concentrol, S.A., 17457 Riudellots de la Selva (Girona) (ES)
(72) Inventor: GUARDIA PONT, Jaume, GIRONA (ES); NADAL SOY, Josep, L'ESCALA (ES); RODRÍGUEZ GUITART, Àngel, GIRONA (ES); SERRA PICA, Joaquim, GIRONA (ES)
(74) Representative: Araujo, Daniel

(57) **Abstract**

It refers to an additive for a release agent for moulded polyurethane foams, having the structure of alkoxylated polydimethylsiloxane. It refers also to a process for preparing said additive, to a release composition comprising said additive. It further refers to a process for making a moulded polyurethane foam using a composition comprising said additive, and to the use of said additive and said release composition for making a moulded polyurethane foam.

## Description

### FIELD OF THE INVENTION

The present invention relates to the field of release compositions for making moulded polyurethane foam.

### BACKGROUND ART

Moulded polyurethane articles are used on a large scale in the automobile industry as body parts, such as flexible car seats, NVH (Noise, Vibration and Harshness) flexible foams, aprons, spoilers, fenders and the like because of their toughness and wear resistance; they are also suitable as shoe soles, heels and for many other purposes. The polyurethanes are cured and simultaneously moulded in closed, heated moulds.

A significant problem in the moulding procedure is that the moulded polyurethane parts tend to adhere to the inner walls of the mould. Release agents are known to those skilled in the art and entrusted with the production of moulded articles.

Release agents are used wherever the adhesion of moulding materials to the moulds, which are made, for example, from highly thermally conductive materials, such as metals, is so great that non-destructive removal of the moulded part from a geometry-forming mould is not possible without such release agents.

Such release agents may be applied on the inner walls of the moulds or added as internal release agents to the reaction formulation.

When applied on the inner walls of the moulds, the active material components are deposited in the surface and the carrier media, such solvents and/or water, evaporate after the application. A thin film of active material deposited in the surface allows an easy removal of the moulded part.

A technical approach in the prior art focuses the use of internal release agents. For example, in European patent application EP-A-0207192 it is disclosed the use of organopolysiloxanes as internal release agents for isocyanate-bound lignocellulose-containing mouldings. In international patent application WO-A-00/55242 it is disclosed an internal mould release system for use in a reaction system for manufacture of a polymer comprising a poly (dimethylsiloxane) surfactant defined by a specific general formula comprising polyoxyethylene and/or polyooxypropylene side chains, and at least one of fatty acids, fatty acid esters, and metal carboxylates derived from fatty acids. In US5500176 it is disclosed an internal mould release agent that includes mixed esters including the reaction product of i) aliphatic dicarboxylic acids, ii) aliphatic polyols, and iii) monocarboxylic acids with 12 to 30 carbon atoms in the molecule, and in US5536465 it is disclosed internal mould release agents which include a zinc carboxylate containing from 8 to 24 carbon atoms, and a fatty acid.

The organopolysiloxanes may have polar radicals which are selected from polyoxyalkylene radicals, amine radicals and radicals with carboxyl groups, sulfonic acid groups or their salts and quaternary ammonium radicals. However, these release agents with carboxyl groups do not form stable mixtures with polyols, which contain amine catalysts and, optionally, tin catalysts. Moreover, the gelling time of the polyurethane system is prolonged by the addition of these compounds. Later work showed that siloxanes with specific functional groups, known from US4076695. can improve the releasability. However, because of their reactivity, these compounds cannot be used as a constituent of the isocyanate component. Some disadvantages were largely overcome by using as release agents the organosilicon compounds described in US4472341, but its release behaviour is not entirely satisfactory. A further disadvantage of said internal release agents is that, in the manufacture of moulded polyurethane articles with a cellular core, they hinder the development or maintenance of the cellular structure and may even cause collapse of the formed foam.

In order to avoid the disadvantages of the internal release agents, another technical approach in prior art is the use of external release agents.

For example, in US5028366 it is disclosed a water-based mould release composition comprising an emulsion or dispersion of a release agent, which is solid at the mould pour temperature and liquid at the demould temperature, and which consists essentially of at least one microcrystalline or paraffin wax and at least one emulsifying agent.

In European patent application EP-A-2810758 it is disclosed a release agent for the manufacture of polyurethane moulded bodies, wherein the release agent comprises: i) at least one carrier medium selected from water and/or organic solvent, ii) at least one polysiloxane, which has at least one quaternary nitrogen , iii) preferably at least one polysiloxane, preferably selected from the group of silicone resins and/or silicone waxes, solid at ambient temperature, and iv) at least one release-active substance selected from the group of waxes, reactive polysiloxanes without quaternary nitrogen residue, soaps and oils.

In European patent application EP-A-2810759 it is disclosed a release agent for the production of polyurethane moulded bodies, which comprises: i) at least one carrier medium selected from water and/or organic solvents, ii) at least one polysiloxane, which comprises at least amino group or amido group and at least one polyalkylene oxide group, iii) preferably at least one polysiloxane which is solid at room temperature, preferably selected from the group of silicone resins and/or silicone waxes, and iv) at least one separation-active substance selected from the group of the waxes, polysiloxanes without amino group or amido group and polyalkylene oxide group, soaps and oils.

In international patent application WO-A-2010/081462 it is disclosed a release agent for the production of polyurethane mouldings comprising: at least one carrier medium selected from water and/or organic solvents, at least one silicone polyglycol ether which has a cloud point of <20 °C in water or is insoluble in water, and optionally at least a separating active substance selected from the group consisting of soaps, oils, waxes and silicones.

Thus, in spite of different proposals in the art regarding release compositions for polyurethane mouldings, there is a need for further additives for release compositions showing satisfactory release properties in combination with lubricant features.

### SUMMARY OF INVENTION

An aspect of the present invention relates to an additive for release compositions.

Another aspect of the invention is a process for preparing said additive.

Another aspect of the invention is a release composition comprising said additive.

Another aspect of the present invention is a process for making a moulded polyurethane foam using a composition comprising said additive.

Another aspect of the invention is the use of said additive for making a moulded polyurethane foam.

### DESCRIPTION OF THE INVENTION

The present invention relates to an additive for release compositions defined by general formula (I):

MeO(CH₂CH₂O)ₙCH₂CH₂CH₂SiMe₂O[SiMe₂O]₈SiMe₂CH₂CH₂CH₂(OCH₂CH₂)ₙOMe (I)

wherein n = 3 - 10, preferably 4 - 9, more preferably 5 - 8, more preferably 6-7, and yet more preferably n = 7.

n represents the average addition number of ethylene oxide units (-CH2CH2O-) present in the molecule, as disclosed in X. Domingo, A guide to surfactants world, Proa, Barcelona, 1995, page 63.

The inventors of the present invention have developed a new additive for release compositions for moulded polyurethane foams, in particular flexible moulded polyurethane foams, which surprisingly shows a satisfactory combination of demoulding properties and lubricant features. These features solve the difficulty of extracting parts of moulded polyurethane, preferably with flexible cold-curing polyurethane foams, and in particular those with negative angles or vertical walls where, in addition to demoulding, lubrication is required. In particular, said additive shows high slippage, it increases the smoothness and lubrication of the film on the part and the mould due to its solubility with wax, it allows high doses without causing orange or elephant skin, it shows high compatibility with the polyurethane system, it provides conductivity to the medium to facilitate the electrostatic application, and it produces minimal soiling and little residue in the mould. In fact, the new additive confers special sliding properties, gives a smooth, open, orderly surface, and does not worsen the demoulding, like others do, due to its high compatibility with waxes.

In the present description, as well as in the claims, the singular forms "a", "an" and "the" include the plural reference unless the context clearly indicates otherwise. The term "about" refers to a deviation of plus/minus 10%, preferably plus/minus 5%. The percentages are expressed in % by weight (wt%), unless stated the contrary. The ranges defined by the terms "between ... and ..." or by the terms "from ...to..." are meant to include also said stated endpoints thereof, and they also include any narrower sub-range.

### Additive

One aspect of the present invention is an additive for release compositions for moulded polyurethane foams defined by general formula (I)

MeO(CH₂CH₂O)ₙCH₂CH₂CH₂SiMe₂O[SiMe₂O]₈SiMe₂CH₂CH₂CH₂(OCH₂CH₂)ₙOMe (I)

wherein n = 3 - 10, preferably 4 - 9, more preferably 5 - 8, more preferably 6-7, and yet more preferably n = 7.

### Process for preparing the additive

Another aspect of the invention is a process for preparing the additive

The process for preparing the additive of the invention comprises reacting compound of formula (II)

H-SiMe₂O[SiMe₂O]₈SiMe₂(H) (II)

with a PEG allyl methyl terminated ether of general formula (III):

MeO(CH₂CH₂O)ₙCH₂CH=CH₂ (III)

wherein n = 3 - 10, preferably 4 - 9, more preferably 5 - 8, more preferably 6-7, and yet more preferably n = 7,
in the presence of a hydrosilylation catalyst.

In an embodiment, compound of general formula (III) is PEG 350 allyl methyl terminated ether.

In an embodiment, the hydrosilylation catalyst is the Speier's platinum catalyst.

According to Benkeser et al., The composition of Speier's catalyst, J. Organometal. Chem., 1980, 185(1), C9-C12, said catalyst contains the complex H[(C₃H₆)PtCl₃] and it is the result of a solution of chloroplatinic acid hexahydrate (H₂PtCl₆ · 6 H₂O) dissolved in isopropanol.

### Release composition

Another aspect of the invention is a release composition for moulded polyurethane foams.

The release composition comprises:
a) the additive of the invention,
b) at least one solvent,
c) at least one wax,
d) at least one catalyst, and
e) optionally at least one auxiliary agent

The release composition comprises an additive of the invention defined by general formula (I), wherein n= 3-10, preferably 4-9, more preferably 5-8, more preferably 6-7, and yet more preferably n = 7.

The content of the additive in the release composition is usually comprised between 0.1 wt% and 5 wt%, preferably between 0.2 wt% and 4 wt%, more preferably between 0.3 wt% and 3 wt%, more preferably between 0.4 wt% and 2 wt%, more preferably between 0.5 wt% and 1 wt%, and yet more preferably between 0.6 wt% and 0.8 wt%, over the total weight of the release composition.

### Solvent

The release composition comprises at least one solvent. Generally, the solvent is the major constituent of the formulation, it is the carrier of the active materials. The selection of the solvent or a solvent combination is carried out by the skilled person according to the common general knowledge based on processing parameters, safety in the industrial site and transport. Usually, boiling point, degree of aromatic content, linearity and degree of branching are parameters to be considered by selecting the solvent.

A suitable solvent is a mixture of aliphatic, linear, branched or alicyclic C₇ - C₁₃ non-aromatic hydrocarbons, generally known as white-spirit, or having a very low content or aromatic hydrocarbons, such as, for example, below 300 ppm, preferably below 100 ppm, and more preferably below 50 ppm.

In an embodiment the solvent is a mixture of aliphatic, linear, branched or alicyclic C₇ - C₁₃ non-aromatic hydrocarbons.

In an embodiment the solvent has a content or aromatic hydrocarbons below 300 ppm, preferably below 100 ppm, and more preferably below 50 ppm.

Commercially available solvents are non-aromatic hydrocarbons, such as, for example, Exxsol^{®} D30, Exxsol^{®} D40, Exxsol D60, Spirdane^{®} D25, Spirdane^{®} D30, Spirdane^{®} D40, Spirdane^{®} D60, hexanes, heptanes, C₇ - C₁₃ n-alkanes, synthetic isoparaffins, such as, for example, Isopar^{®} G, Isopar^{®} H, Isopar^{®} J, Isopar^{®} L, Isopar^{®} M, through companies such as, for example, Exxon, or Total.

The content of the solvent in the release composition is usually comprised between 70 wt% and 95 wt%, preferably between 75 wt% and 92 wt%, more preferably between 78 wt% and 90 wt%, more preferably between 80 wt% and 88 wt%, and yet more preferably between 83 wt% and 86 wt%, over the total weight of the release composition.

### Wax

The release composition comprises at least one wax.

Waxes are a diverse class of organic compounds that are lipophilic, malleable solids near ambient temperatures. They include higher alkanes and lipids, typically with melting points above about 40 °C. Waxes are insoluble in water, but soluble or partially soluble in nonpolar organic solvents such as hexane. Natural waxes of different types are produced by plants and animals and occur in petroleum.

In the release composition of the invention, the wax is generally selected from synthetic or natural origin, consisting of homologous series of linear or branched long-chain aliphatic hydrocarbons, generally lacking functional groups.

Waxes suitable to be used in said composition are usually selected from Fischer-Tropsch waxes, synthetic polyethylene (PE) waxes, high density polyethylene (HDPE) waxes, low density polyethylene (LDPE) waxes, macrocrystalline paraffin waxes, microcrystalline paraffin waxes, refined hydrocarbon waxes, alkane waxes with carboxylic groups, in the form of acid, salt or amide, and mixtures thereof.

Commercially available waxes are, for example, Fischer-Tropsch waxes (Sasol Wax C-80, or Sasol Wax spray 105; synthetic polyethylene waxes (Polywax^{®} Series); high density polyethylene waxes (Licowax^{®} PE 130, or Licowax^{®} PE 190); low density polyethylene waxes (Honeywell A-C^{®} 16 or Honeywell A-C^{®} 16A); macrocrystalline and microcrystalline paraffin waxes (Cepsa Cerasur^{®} 725, Cepsa Parasur^{®} 130, Cepsa Parasur^{®} 150, Cepsa Parasur^{®} 206, Cepsa Parasur^{®} 600, Repsol Rlesa^{®} 5860, Repsol Rlesa^{®} 6062 or Repsol Rlesa^{®} 7030); refined hydrocarbon waxes (TeCe-Ceresin ^{®} N 662, TeCe-Ceresin^{®} G60, TeCe-Ceresin^{®} G70, TeCe-Ozokerit^{®} H 502, TeCe-Ozokerit^{®} HH 680, Cerafumei^{®} 6501, Cerafumei^{®} 6502, Cerafumei^{®} 6503, Cerafumei^{®} 6504, or Sasol Wax^{®} M3C); alkane waxes with carboxylic groups, in form of acid, salt, or amide (Licowax^{®} R 21, Licowax^{®} S or Licowax^{®} C).

In an embodiment, the composition comprises a wax, which is a combination of Fischer-Tropsch wax, synthetic polyethylene wax and alkane wax with carboxylic group.

In an embodiment, for ready-to use release compositions, the content of the wax in the release composition is usually comprised between 2 wt% and 20 wt%, preferably between 3 wt% and 15 wt%, more preferably between 4 wt% and 10 wt%, and yet more preferably between 4 wt% and 8 wt%, over the total weight of the release composition.

In an embodiment, for concentrated release compositions to be diluted to a ready-to-use composition, the content of the wax in the release composition is usually comprised between 5 wt% and 30 wt%, preferably between 8 wt% and 25 wt%, more preferably between 10 wt% and 22 wt%, and yet more preferably between 15 wt% and 20 wt%, over the total weight of the release composition.

### Catalyst

The release composition comprises at least one catalyst.

The release composition is suitable for preparing moulded polyurethane foams, in particular flexible polyurethane foams.

A polyurethane is a polymer composed of organic units joined by carbamate (urethane) links, which is typically produced by reacting an isocyanate with a polyol.

A catalyst is included in the release composition of the invention to achieve the desired release efficiency and curing efficiency of the demoulded polyurethane foam.

Catalysts suitable to be used in the release composition of the invention may be tertiary amines, such as triethylenediamine (TEDA, also called DABCO, 1,4-diazabicyclo[2.2.2]octane), dimethylcyclohexylamine (DMCHA), dimethylethanolamine (DMEA), or bis-(2-dimethylaminoethyl)ether), alkyl metal carboxylates, such as alkyl tin, bismuth, titanium, zirconium, or zinc carboxylates, for example, dibutytin dilaurate.

In an embodiment, the catalyst is selected from triethylenediamine (TEDA), dimethylcyclohexylamine (DMCHA), dimethylethanolamine (DMEA), and bis-(2-dimethylaminoethyl)ether).

In an embodiment, the catalyst is an alkyl metal carboxylate selected from alkyl tin, bismuth, titanium, zirconium, or zinc carboxylates.

In an embodiment the catalyst is dibutyltin dilaurate.

Commercially available catalysts are, for example, tin based catalyst DOW Metatin 712, Metatin 715, Metatin 730, TIBCHEMICALS TIB KAT 216, TIB KAT 218, TIB KAT 318, PMC Group Fascat 4202, Evonik Kosmos^{®} 29, Borchers Borchi^{®} Kat 28, Galata Chemicals Fomrez UL-28, Fomrez UL-32, Fomrez UL-38, tin free based catalyst TIBCHEMICALS TIB KAT 616, TIB KAT 716, TIB KAT 718, TIB KAT 720, Shepherd BiCAT 8210, Borchers Borchi^{®} Kat 24, Umicore Valikat Bi 2010.

The content of the catalyst in the release composition is usually comprised between 0.1 wt% and 5 wt%, preferably between 0.2 wt% and 4 wt%, more preferably between 0.3 wt% and 3 wt%, more preferably between 0.4 wt% and 2 wt%, more preferably between 0.5 wt% and 1 wt%, and yet more preferably between 0.6 wt% and 0.8 wt%, over the total weight of the release composition.

### Auxiliary agents

In an embodiment, the release composition comprises at least one auxiliary agent.

Usually, the auxiliary agent is selected from the consisting of antistatic agents, metallic soaps, inorganic fillers, electrostatic agents, antioxidants, wetting agents, surface modifier stabilizers (e.g., poly(siloxane-glycol) surfactants), and mixtures thereof, as disclosed, for example, in EP-A-2379296, EP-A-2810758, or US4936917.

Good release is improved by minimizing the use and quantity of non-release additives such as the components consisting of antistatic agents, metallic soaps, inorganic fillers, electrostatic agents, antioxidants, wetting agents, surface modifier stabilizers and mixtures thereof.

Their use, in the right quantity and appropriate selection affect the surface of the moulded parts. Cellular distribution, size, and degree of openness of the cells on the surface of the moulded part, are some of the main characteristics that such additives affect. Additional characteristics, haptics, gloss, degree of smoothness is also affected by the type and quantity of additives, and the content of said additives may be determined by the skilled person in routine testing in order to obtain the desired final properties of the moulded article.

The content of the additive or combination of additives in the release composition is usually comprised between 0.1 wt% and 5 wt%, preferably between 0.2 wt% and 4 wt%, more preferably between 0.3 wt% and 3 wt%, more preferably between 0.3 wt% and 2 wt%, more preferably between 0.3 wt% and 1 wt%, over the total weight of the release composition.

### Process for preparing the release composition.

The release composition according to the invention can be produced using processes known from the prior art. The following procedure is preferably used:
1) melting the wax and the additive of the invention in a fraction of the solvent comprised between 10 wt% and 20 wt% of the total amount of solvent, at a temperature comprised between 100 °C and 130 °C, preferably between 105 °C and 125 °C, and more preferably between 110 °C and 120 °C.
2) cooling at a temperature comprised between 70 °C and 90 °C, preferably at about 80 °C,
3) adding the rest of the solvent comprised between 80 wt% and 90 wt%, under high shear stirring,
4) cooling to a temperature comprised between 20 °C and 30 °C under stirring, and
5) adding the additive and the catalyst under stirring, optionally adding at least one additive.

### Process for making a moulded polyurethane foam.

The process for making a moulded polyurethane foam using the composition comprising the additive of the invention also forms part of the invention.

Said process comprises usually the following steps:
a) pre-heating of an aluminium mould at a temperature of about 60 °C;
b) applying a film of the release composition of the invention to the aluminium mould by air pistol;
c) drying the release film applied on the mould; and
d) filling the mould with a cold-soft PU foam.

Cold-soft PU foam is commercially available, or it may be prepared according to a composition disclosed in the art, for example, in US4936917, or US5043409.

The evaluation of the release efficiency consists in the measurement of the following aspects:
i) Demoulding force (score 10 for a force below 0.5 Nw in a dynamometer)
ii) Finishing quality
   - Surface quality (score 10 for smooth surface);
   - Porosity quality (score 10 for high and regular porosity);
   - Foam surface quality (score 10 for no attack to the PUR foam)

### Use of the additive

Another aspect of the present invention is the use of the additive of the invention for making a moulded polyurethane foam, in particular a flexible moulded polyurethane foam.

Another aspect of the present invention is the use of the release composition for making a moulded polyurethane foam, in particular a flexible moulded polyurethane foam.

Surprisingly, the additive of the invention shows a combination of demoulding properties and lubricant features. These features solve the difficulty of extracting parts of moulded polyurethane, preferably with flexible polyurethane foams, and in particular those with negative angles or vertical walls where, in addition to demoulding, lubrication is required. In particular, said additive shows high slippage, it increases the smoothness and lubrication of the film on the part and the mould due to its solubility with wax, it allows high doses without causing orange or elephant skin, it shows high compatibility with the polyurethane system, it provides conductivity to the medium to facilitate the electrostatic application, and it produces minimal soiling and little residue in the mould.

The new additive is by far more soluble and compatible with active materials, e.g., waxes, as shown in the Examples, which are comprised in a complete release composition. Therefore, this compatibility has a positive impact on surface appearance on the demoulded part.

The present invention may be defined according to the following embodiments:
1.- An additive for release compositions defined by general formula (I)

   MeO(CH₂CH₂O)ₙCH₂CH₂CH₂SiMe₂O[SiMe₂O]₈SiMe₂CH₂CH₂CH₂(OCH₂CH₂)ₙOMe (I)

   wherein n = 3 - 10, preferably 4 - 9, more preferably 5 - 8, more preferably 6 - 7, and yet more preferably n = 7.
2.- A process for preparing the additive of embodiment 1, which comprises reacting compound of formula (II)

   H-SiMe₂O[SiMe₂O]₈SiMe₂(H) (II)

   with a PEG allyl methyl terminated ether of general formula (III):

   MeO(CH₂CH₂O)ₙCH₂CH=CH₂ (III)

   wherein n = 3 - 10, preferably 4 - 9, more preferably 5 - 8, more preferably 6 - 7, and yet more preferably n = 7,
   in the presence of a hydrosilylation catalyst.
3.- The process according to embodiment 2, wherein compound of general formula (III) is PEG 350 allyl methyl terminated ether.
4.- The process according to any one of embodiments 2 or 3, wherein the hydrosilylation catalyst is the Speier's platinum catalyst.
5.- A release composition for moulded polyurethane foams, which comprises:
   a) the additive according to embodiment 1,
   b) at least one solvent,
   c) at least one wax,
   d) at least one catalyst, and
   e) optionally at least one auxiliary agent
   f)
6.- The release composition according to embodiment 5, wherein the content of the additive in the release composition is comprised between 0.1 wt% and 5 wt%, preferably between 0.2 wt% and 4 wt%, more preferably between 0.3 wt% and 3 wt%, more preferably between 0.4 wt% and 2 wt%, more preferably between 0.5 wt% and 1 wt%, and yet more preferably between 0.6 wt% and 0.8 wt%, over the total weight of the release composition.
7.- The release composition according to any one of embodiments 5 or 6, wherein the solvent is a mixture of aliphatic, linear, branched or alicyclic C₇ - C₁₃ non-aromatic hydrocarbons.
8.- The release composition according to embodiment 7, wherein the solvent has a content or aromatic hydrocarbons below 300 ppm, preferably below 100 ppm, and more preferably below 50 ppm.
9.- The release composition according to any one of embodiments 5 to 8, wherein the content of the solvent in the release composition is comprised between 70 wt% and 95 wt%, preferably between 75 wt% and 92 wt%, more preferably between 78 wt% and 90 wt%, more preferably between 80 wt% and 88 wt%, and yet more preferably between 83 wt% and 86 wt%, over the total weight of the release composition.
10.- The release composition according to any one of embodiments 5 to 9, wherein the wax is selected from Fischer-Tropsch waxes, synthetic polyethylene (PE) waxes, high density polyethylene (HDPE) waxes, low density polyethylene (LDPE) waxes, macrocrystalline paraffin waxes, microcrystalline paraffin waxes, refined hydrocarbon waxes, alkane waxes with carboxylic groups, in the form of acid, salt or amide, and mixtures thereof.
11.- The release composition according to embodiment 9, wherein the wax is a combination of Fischer-Tropsch wax, synthetic polyethylene wax and alkane wax with carboxylic group.
12.- The release composition according to any one of embodiments 5 to 11, wherein the content of the wax in the release composition is comprised between 2 wt% and 20 wt%, preferably between 3 wt% and 15 wt%, more preferably between 4 wt% and 10 wt%, and yet more preferably between 4 wt% and 8 wt%, over the total weight of the release composition.
13.- The release composition according to any one of embodiments 5 to 11, wherein the content of the wax in the release composition is comprised between 5 wt% and 30 wt%, preferably between 8 wt% and 25 wt%, more preferably between 10 wt% and 22 wt%, and yet more preferably between 15 wt% and 20 wt%, over the total weight of the release composition.
14.- The release composition according to any one of embodiments 5 to 13, wherein the catalyst is selected from tertiary amines and alkyl metal carboxylates.
15.- The release composition according to embodiment 14, wherein the catalyst is selected from triethylenediamine (TEDA), dimethylcyclohexylamine (DMCHA), dimethylethanolamine (DMEA), and bis-(2-dimethylaminoethyl)ether)
16.- The release composition according to embodiment 14, wherein the catalyst is an alkyl metal carboxylate.
17.- The release composition according to embodiment 16, wherein the catalyst is an alkyl metal carboxylate selected from alkyl tin, bismuth, titanium, zirconium, or zinc carboxylates.
18.- The release composition according to embodiment 17, wherein the catalyst is dibutyltin dilaurate.
19.- The release composition according to any one of embodiments 5 to 18, wherein the content of the catalyst in the release composition is comprised between 0.1 wt% and 5 wt%, preferably between 0.2 wt% and 4 wt%, more preferably between 0.3 wt% and 3 wt%, more preferably between 0.4 wt% and 2 wt%, more preferably between 0.5 wt% and 1 wt%, and yet more preferably between 0.6 wt% and 0.8 wt%, over the total weight of the release composition.
20.- The release composition according to any one of embodiments 5 to 19, wherein it comprises at least one auxiliary agent.
21.- The release composition according to embodiment 20, wherein the auxiliary agent is selected from antistatic agents, metallic soaps, inorganic fillers, electrostatic agents, antioxidants, wetting agents, surface modifier stabilizers, and mixtures thereof.
22.- A process for making a moulded polyurethane foam, which comprises:
   a) pre-heating of an aluminium mould at a temperature of about 60 °C;
   b) applying a film of the release composition according to any one of embodiments 5 to 21 to the aluminium mould by air pistol;
   c) drying the release film applied on the mould; and
   d) filling the mould with a cold-soft PU foam.
   e)
23.- The use of the additive according to embodiment 1 for making a moulded polyurethane foam.
24.- The use of the release composition according to any one of embodiments 5 to 21 for making a moulded polyurethane foam.
25.- The use according to any one of embodiments 23 or 24 for making a flexible moulded polyurethane foam.

### EXAMPLES

Testing of the additive of the invention consisted in the evaluation of intrinsic characteristics such as the compatibility with the components of the release composition, such components being waxes and solvents.

Efficiency characteristics of the additive on the demoulding process was tested determining the release efficiency (reduced force to release the moulded part), and assessing the surface characteristics of such moulded part, including surface quality, porosity quality, and foam surface quality.

### Preparative example: Preparation of compound of formula (II)

H-SiMe₂O[SiMe₂O]₈SiMe₂(H) (II)

To a 3-bottle neck flask equipped with a reflux, with a magnetic stirrer and nitrogen flow, 81.54 g of octamethylcyclotetrasiloxane 98% (Gelest), 18.46 g of 1,1,3,3-tetramethyldisiloxane 98% (Gelest), 2 g of styrene-divinylbenzene macroporous sulfonic acid catalyst (Lewatit^{®} K 2629) were added.

The mixture was maintained under stirring and nitrogen flow for 20 min. The reaction flask was then heated to reach a temperature of 80 °C. The reaction is maintained at a temperature in the range 70 °C - 100 °C, for a time in the range 12 - 24 h, under a constant nitrogen flow.

The work-up of the reaction consisted in the filtration of the catalyst and the recovery of a transparent clear liquid of low viscosity (< 100mPas at 25 °C).

The product was characterized by FT-IR and ¹H-NMR.

### Example 1: Preparation of an additive of general formula (I)

MeO(CH₂CH₂O)₇CH₂CH₂CH₂SiMe₂O[SiMe₂O]₈SiMe₂CH₂CH₂CH₂(OCH₂CH₂)₇OMe (I)

An additive of general formula (I), wherein n=7, according to the invention was prepared according to the following process.

To a 3-bottle neck flask equipped with a reflux, with a magnetic stirrer and nitrogen flow, 64 g of PEG 350 allyl methyl terminated ether (MeO(CH₂CH₂O)₇CH₂CH=CH₂, Polyglycol AM-350, Clariant) and 36 g of Compound of formula (II), prepared according to the Preparative Example were added.

The mixture was maintained under nitrogen flow for 20 min. The reaction flask was then heated to reach a temperature of 80 °C. At this temperature, 0.01 g of a solution of Speier's platinum catalyst (1:10 in isopropyl alcohol) (Johnson Matthey) was added.

The reaction was initiated, and an exotherm period followed reaching a temperature in the range 120 °C - 140 °C.

The reaction was maintained at a temperature comprised between 80 °C and not higher than 160 °C.

The hydrosilylation reaction run smoothly in 2 - 4 hours. The reaction was finished when the signal at 2150 cm⁻¹ (Si-H group) in the infrared spectrum disappeared.

The final product was a clear transparent liquid, with a viscosity lower than 200 mPa.s at 25 °C. It was characterized by FT-IR, GPC, and ¹H-NMR.

The product is soluble in water. The cloud point in water (1%) is 30 °C - 32 °C.

### Example 2: Preparation of a release composition

A release composition according to the invention was prepared according to the following process.

In a reactor equipped with an anchor-type mechanical stirrer, 13.2 kg of waxes (mixture of 6.2 kg of synthetic polyethylene wax, 6.2 kg of Fischer-Tropsch wax and 0.8 kg of alkane wax with carboxylic group) and 21.26 kg of non-aromatic hydrocarbons (distillation range comprised between 140 °C and 220 °C) and were heated up to about 120 °C for about 30 - 60 min under stirring to melt the waxes.

63.25 kg of non-aromatic hydrocarbons were added under stirring to the reactor in a period of time of about 60 min.

After that time, stirring with a high shear disperser (Cowles-type) was continued for about 30 min.

0.6 kg of dibutyltin dilaurate and 0.6 kg of the additive of Example 1 were added to the wax dispersion under stirring, and the release composition was completed with non-aromatic hydrocarbons up to 100 kg.

### Example 3: Testing of the additive of general formula (I)

The features of additive according to the invention were assessed under different conditions.

### 3.1.- Compatibility with solvent

5 g of the additive agent of Example 1 was mixed with 95 g of hydrogenated naphtha. After 60 min standing at room temperature, the solid content of 20 g sample of the solution was determined by solvent evaporation.

It resulted that 1.8 g of the additive was dissolvent in 20 g of solvent, which represents that 90% of additive of Example 1 was solubilized by the solvent significantly higher than other commercial additives of the same product category, as shown in Table I:

**TABLE I**

| Additive | x | y | a | b | R | Solubility |
|---|---|---|---|---|---|---|
| Additive A | 2 | 1 | 6 | 0 | OCH₃ | 75 |
| Additive B | 60 | 10 | 30 | 34 | OCOCH₃ | 28 |
| Additive C | 100 | 10 | 22 | 20 | OCH₃ | 32 |
| Additive D | 80 | 8 | 22 | 20 | OH | 20 |
| Additive E | 30 | 4 | 10 | 0 | OCH₃ | 13 |

Wherein x, y, a, b and R refers to the following general formula:

(CH₃)₃SiO(SiCH₃(CH₂CH₂CH₂(OCH₂CH₂)ₐ(OCH₂CH(CH₃))_{b}OR)O)_{y}(Si(CH₃)₂O)ₓSi(CH₃)₃

### 3.2- Compatibility with waxes

2 g of the additive of Example 1 was melted with 8 g of a wax at a temperature not higher than 140 °C. The melt was extended on a metal surface at 20 °C to 25 °C, to obtain a solidified sheet of additive and wax.

Once cooled, the solidified sheet was put in a dichloromethane cold bath at a temperature of 20 °C for 30 sec.

The evaporation of the dichloromethane yielded the percentage of the additive that remained in the dichloromethane. The content of the additive incorporated into the wax was obtained by calculating the difference of weight.

The following Table II shows the results of the compatibility behaviour in front of different waxes, expressed as the wt% of additive, which remained solubilized in the wax:

**TABLE II**

| Wax | wt% |
|---|---|
| High hardness, medium melting point and high viscosity PE synthetic wax A | 72.5 |
| High hardness, medium melting point and high viscosity PE synthetic wax B | 72.5 |
| High hardness, high melting point and high viscosity PE synthetic wax C | 72.0 |
| High hardness, high melting point and high viscosity PE synthetic wax D | 65.0 |
| Fischer-Tropsch wax | 62.5 |
| Alkane wax with carboxylic groups | 85.0 |
| Paraffin wax | 80.0 |
| Amide wax (EBS) | 57.0 |

It was observed that the additive showed a broad compatibility range with waxes, showing a mean value of about 71 wt% of solubilized additive in wax.

Dichloromethane was selected as solvent due to its ability to solubilize products of the same category of the additive of the invention, but not the waxes.

The results showed that the additive was well incorporated in the wax , and it showed a behaviour like a wax in the testing, i.e., it was not significantly solubilized using dichloromethane. The dichloromethane solubilized only the additive , which remained non-incorporated in the wax.

Typical results for additives of the same category of the additive of the invention show average values of <50 wt%.

### 3.3.- Release efficiency

A complete release composition comprising 4 wt% of a wax and 1 wt% of additive of Example 1, was heated in 10 wt% of a non-aromatic hydrocarbon (e.g., Exxsol^{®} D30) at a temperature comprised between 110 °C and 120 °C. The obtained solution was cooled to 80 °C, and 85 wt% of non-aromatic hydrocarbons (e.g., Exxsol^{®} D30) was added under high shear stirring. The mixture was cooled to room temperature by maintaining the stirring .

The tested waxes were:
a) Alkane wax with carboxylic group
b) Fischer-Tropsch wax
c) Synthetic PE wax (wax A)
d) Synthetic PE wax (wax B)

The different compositions (a to d) are tested in a mould, working in the conditions detailed in the process for making a moulded polyurethane foam. Said process comprised the following steps:
a) an aluminium mould, size 30 cm x 30 cm x10 cm, was pre heated at 60 °C;
b) the release composition was applied to the aluminium mould by Schütze pistol, 0.5 mm; flow rate 160 g/min; application time 5 s; air pressure 2 bar;
c) the release film applied on the mould was dried for 1 minute;
d) subsequently, the mould was filled with a cold-soft PU foam.

The polyurethane formulation was based in MDI (methylene diphenyl diisocyanate) and in a polyol composition. The polyol composition consisted of a combination of a flexible polyether polyol, such as, for example, Lupranol^{®} 2095 (BASF), and an open cellular polyol, such as, for example, Lupranol^{®} 2048 (BASF), and water, diethanolamine, catalysts and stabilizers, as disclosed, for example, in US4936917.

The foam components were mixed in a ratio of 100:63, with a high-speed stirring blade and cured after entering the mould at 58-60 °C for 2 min.

The evaluation of the release efficiency consists in the measurement of the following points:
i) Demoulding force (score 10 for a force below 0.5 Nw in a dynamometer)
ii) Finishing quality:
   - Surface quality (score 10 for smooth surface);
   - Porosity quality (score 10 for high and regular porosity);
   - Foam surface quality (score 10 for no attack to the PUR foam)

The following Table III shows the results obtained with the additive of Example 1 in the presence of different waxes:

**TABLE III**

| Feature/Wax | a) Alkane wax with carboxylic group | b) Fischer-Tropsch wax | c) Synthetic PE wax (wax A) | d) Synthetic PE wax (wax B) |
|---|---|---|---|---|
| Demoulding force | 9 | 10 | 10 | 9 |

| Finishing | | | | |
|---|---|---|---|---|
| Surface quality | 10 | 9 | 10 | 10 |
| Porosity quality | 4 | 8 | 7 | 7 |
| Foam surface quality | 9 | 10 | 10 | 9 |
| Total score | 32 | 37 | 37 | 35 |

It can be observed that the demoulding behaviour of the additive of Example 1 show a good combination of features in different wax types.

This is a major improvement due to the fact that different waxes are necessary to obtain the desired result in field applications, where different temperatures are used, and different formulations are prepared by companies to obtain the required physical properties on the finished PUR part.

Broad compatibility of the new additive of Example 1, excellent release efficiency and good finishing of PUR parts had been found as improved results compared with state of the art additive belonging to the same product category.

## Claims

1. An additive for release compositions defined by general formula (I)
MeO(CH₂CH₂O)ₙCH₂CH₂CH₂SiMe₂O[SiMe₂O]₈SiMe₂CH₂CH₂CH₂(OCH₂CH₂)ₙOMe (I)
wherein n = 3 - 10, preferably 4 - 9, more preferably 5 - 8, more preferably 6 - 7, and yet more preferably n = 7.

2. A process for preparing the additive of claim 1, which comprises reacting compound of formula (II)
H-SiMe₂O[SiMe₂O]₈SiMe₂(H) (II)
with a PEG allyl methyl terminated ether of general formula (III):
MeO(CH₂CH₂O)ₙCH₂CH=CH₂ (III)
wherein n = 3 - 10, preferably 4 - 9, more preferably 5 - 8, more preferably 6 - 7, and yet more preferably n = 7,
in the presence of a hydrosilylation catalyst.

3. A release composition for moulded polyurethane foams, which comprises:
a) the additive according to claim 1,
b) at least one solvent,
c) at least one wax,
d) at least one catalyst, and
e) optionally at least one auxiliary agent

4. The release composition according to claim 3, wherein the content of the additive in the release composition is comprised between 0.1 wt% and 5 wt%, over the total weight of the release composition.

5. The release composition according to any one of claims 3 or 4, wherein the solvent is a mixture of aliphatic, linear, branched or alicyclic C₇ - C₁₃ non-aromatic hydrocarbons.

6. The release composition according to any one of claims 3 to 5, wherein the content of the solvent in the release composition is comprised between 70 wt% and 95 wt%, over the total weight of the release composition.

7. The release composition according to any one of claims 3 to 6, wherein the wax is selected from Fischer-Tropsch waxes, synthetic polyethylene (PE) waxes, high density polyethylene (HDPE) waxes, low density polyethylene (LDPE) waxes, macrocrystalline paraffin waxes, microcrystalline paraffin waxes, refined hydrocarbon waxes, alkane waxes with carboxylic groups, in the form of acid, salt or amide, and mixtures thereof; preferably the wax is a combination of Fischer-Tropsch wax, synthetic polyethylene wax and alkane wax with carboxylic group.

8. The release composition according to any one of claims 3 to 7, wherein the content of the wax in the release composition is comprised between 2 wt% and 20 wt%, preferably between 3 wt% and 15 wt%, more preferably between 4 wt% and 10 wt%, and yet more preferably between 4 wt% and 8 wt%, over the total weight of the release composition.

9. The release composition according to any one of claims 3 to 7, wherein the content of the wax in the release composition is comprised between 5 wt% and 30 wt%, preferably between 8 wt% and 25 wt%, more preferably between 10 wt% and 22 wt%, and yet more preferably between 15 wt% and 20 wt%, over the total weight of the release composition.

10. The release composition according to any one of claims 3 to 9, wherein the catalyst is selected from tertiary amines and alkyl metal carboxylates.

11. The release composition according to any one of claims 3 to 10, wherein it comprises at least one auxiliary agent.

12. The release composition according to claim 11, wherein the auxiliary agent is selected from antistatic agents, metallic soaps, inorganic fillers, electrostatic agents, antioxidants, wetting agents, surface modifier stabilizers, and mixtures thereof.

13. The use of the additive according to claim 1 for making a moulded polyurethane foam.

14. The use of the release composition according to any one of claims 3 to 12 for making a moulded polyurethane foam.

15. The use according to any one of claims 13 or 14 for making a flexible moulded polyurethane foam.
